# EUROPÄISCHE PATENTANMELDUNG

(11) **EP 3 825 030 A1**
(43) Veröffentlichungstag der Anmeldung: **26.05.2021**
(21) Anmeldenummer: 20201378.5
(22) Anmeldetag: 12.10.2020
(51) Int. Cl.: B21D 53/18, F16J 3/04, F16L 11/115

(54) **VERFAHREN ZUR HERSTELLUNG VON STÜTZRINGEN UND VERWENDUNG DESSELBEN**

(30) Priorität: 19.11.2019 DE 102019217782
(71) Anmelder: ContiTech MGW GmbH, 34346 Hann. Münden (DE)
(72) Erfinder: Flach, Axel - c/o Continental AG, 30419 Hannover (DE); Hesberg, Ulrich - c/o Continental AG, 30419 Hannover (DE)
(74) Vertreter: Continental Corporation

(57) **Zusammenfassung**

Die Erfindung betrifft ein Verfahren zur Herstellung von Stützringen (1) aus einem metallischen Werkstoff, bei welchem in einem ersten Schritt Lochscheiben (10) mit einer konzentrischen Bohrung (11) und einem die konzentrische Bohrung (11) umgebenden Kreisring (12) bereitgestellt und anschließend in mehreren aufeinanderfolgenden Umformschritten zu dem Stützring umgeformt werden, wobei der Kreisring (12) in einem ersten Umformschritt einen etwa U-förmigen Querschnitt mit zwei über einen abgerundeten Steg (120) verbundenen U-Schenkelenden (121, 122) erhält und nachfolgend in einem zweiten Umformschritt die U-Schenkelenden (121, 122) einander zugewandt abgebogen werden.

## Beschreibung

Die Erfindung betrifft ein Verfahren zur Herstellung von Stützringen aus einem metallischen Werkstoff, bei welchem in einem ersten Schritt Lochscheiben mit einer konzentrischen Bohrung und einem die konzentrische Bohrung umgebenden Kreisring bereitgestellt und anschließend in mehreren aufeinanderfolgenden Umformschritten zu dem Stützring umgeformt werden.

Stützringe der eingangs genannten Art werden beispielsweise als Druckring für Wellschläuche bzw. Wellrohre eingesetzt, die zum Beispiel für die Verbindung von Automobilkomponenten vielfältige Verwendung finden. Die Druckringe werden als metallische Verstärkungsringe im Bereich der Wellentäler außenseitig auf die Wellschläuche bzw. Wellrohre aufgebracht, um bei einem gebogenen Verlauf derselben ein Quetschen bzw. Einknicken zu verhindern. Die Druckringe bilden insoweit die Wellentäler aus bzw. stabilisieren diese.

Aus dem Stand der Technik ist es bekannt, derartige Stützringe aus einem ringförmig gebogenen Draht herzustellen, dessen Enden miteinander verschweißt werden. Dies ist sehr aufwendig und kostenintensiv und mit hohen Ausschussraten verbunden. Überdies müssen die Schweißgrate aufwendig entfernt werden, um Beschädigungen des zu verstärkenden Wellschlauchs bzw. Wellrohrs auszuschließen.

Aus der gattungsbildenden DE 60 2004 000 461 T2 ist es daher bereits vorgeschlagen worden, derartige Stützringe aus Lochscheiben eines metallischen Werkstoffes, die beispielsweise als Stanzteile aus einem Metallblech erhalten werden, durch mehrfache Umformung herzustellen, wobei die Stützringe einen im wesentlichen U-förmigen Querschnitt erhalten, deren Öffnung radial nach auswärts weist. Allerdings ist die bekannte Herstellung unerwünscht komplex und aufwendig.

Aufgabe der Erfindung ist es, ein Verfahren zur Herstellung von Stützringen vorzuschlagen, mit welchem eine besonders rationelle und einfache Fertigung erfolgen kann.

Zur Lösung der gestellten Aufgabe wird erfindungsgemäß die Ausgestaltung des Verfahrens gemäß den Merkmalen des Patentanspruches 1 vorgeschlagen.

Vorteilhafte Ausgestaltungen und Weiterbildungen der Erfindung sind Gegenstand der abhängigen Ansprüche.

Der erfindungsgemäße Vorschlag sieht vor, dass der Kreisring in einem ersten Umformschritt einen etwa U-förmigen Querschnitt mit zwei über einen abgerundeten Steg verbundenen U-Schenkelenden erhält und nachfolgend in einem zweiten Umformschritt die U-Schenkelenden einander zugewandt abgebogen werden.

Erfindungsgemäß wird somit beispielsweise in einer Stanzpresse in einem maximal 3-stufigen Umformungsprozess ein Stützring als einfaches Blechformteil auf besonders rationelle Weise erhalten.

Nach einem Vorschlag der Erfindung werden im zweiten Umformschritt die U-Schenkelenden derart abgebogen, dass der Kreisring einen im Wesentlichen kreisförmigen Querschnitt erhält, sodass scharfe Kanten zuverlässig vermieden werden.

Die U-Schenkelenden können im zweiten Umformschritt nach einem weiteren Vorschlag der Erfindung aneinander zur Anlage kommen.

Die Lochscheiben als Ausgangsmaterial der erfindungsgemäß hergestellten Stützringes können beispielsweise aus einem bereitgestellten Blech des metallischen Werkstoffes ausgestanzt werden.

Nach einem weiteren Vorschlag der Erfindung wird die Lochscheibe mitsamt des Kreisringes, die sich zunächst in einer Erstreckungsebene erstrecken, derart im ersten Umformschritt umgeformt, dass sich der U-förmige Querschnitt senkrecht zu dieser Ebene erstreckt, d. h. die Öffnung des U-förmigen Querschnittes steht senkrecht auf die Erstreckungsebene.

Durch diese Orientierung ist es möglich, den Stützring ohne aufwändige Wendevorgänge und dergleichen in den beiden aufeinanderfolgenden Umformschritten auszubilden, wobei entweder die Bearbeitung in zwei aufeinanderfolgenden Werkzeugen oder aber in einem Kombiwerkzeug, welches zwei aufeinanderfolgende Umformschritte gestattet, erfolgen kann.

Der nach dem erfindungsgemäßen Verfahren hergestellte Stützring kann insbesondere als Druckring eines Wellrohrs Verwendung finden, das erfindungsgemäße Verfahren kann jedoch auch für die Herstellung von Stütz- und Metallringen aller sonstigen Art verwendet werden.

Weitere Ausgestaltungen und Einzelheiten der Erfindung werden nachfolgend anhand eines Ausführungsbeispiels in der Zeichnung exemplarisch erläutert. Es zeigen:

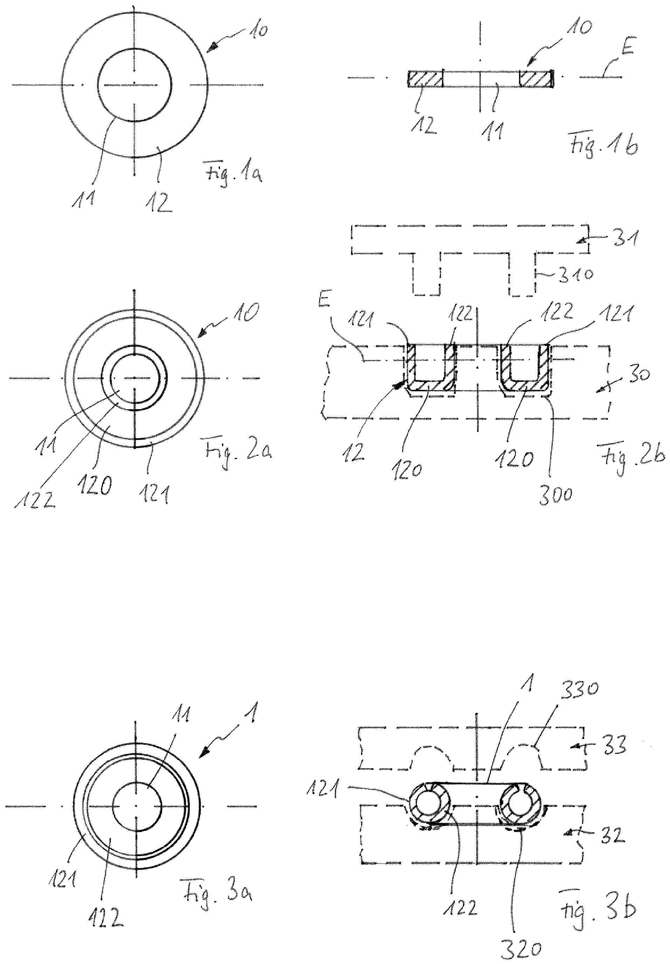

- Figur 1 a: die Aufsicht auf eine Lochscheibe;
- Figur 1 b: den Schnitt durch die Lochscheibe gemäß Figur 1 a;
- Figur 2 a: die Aufsicht auf die Lochscheibe gemäß Figur 1 a nach dem ersten Umformschritt;
- Figur 2 b: den Schnitt durch die Lochscheibe gemäß Figur 2 a einschließlich des angedeuteten Verlaufs des eingesetzten Umformwerkzeuges;
- Figur 3 a: die Aufsicht auf den nach dem zweiten Umformschritt erhaltenen Stützring;
- Figur 3 b: den Schnitt durch den Stützring gemäß Figur 3 a einschließlich des angedeuteten Verlaufs des eingesetzten Umformwerkzeuges.

Aus den Figuren ist in chronologischer Abfolge die Umformung einer sich zunächst in einer Erstreckungsebene E flach erstreckenden Lochscheibe 10 aus einem metallischen Werkstoff zu einem Stützring 1, wie er beispielsweise als Druckring eines Wellrohrs Verwendung finden kann, dargestellt.

Die aus den Figuren 1 a und 1 b ersichtliche Lochscheibe 10 ist beispielsweise als Stanzteil aus einem bereitgestellten Blech des metallischen Werkstoffes, beispielsweise Edelstahl, hergestellt worden und umfasst eine konzentrische Bohrung 11 sowie einen die konzentrische Bohrung 11 umgebenden Kreisring 12.

In einem ersten, in der Figur 2b dargestellten Umformschritt wird die bereitgestellte Lochscheibe 10 in einem Gesenk mit Unterteil 30 und Oberteil 31 so umgeformt, dass senkrecht zur Erstreckungsebene E der Kreisring 12 einen etwa U-förmigen Querschnitt mit zwei über einen abgerundeten Steg 120 verbundenen U-Schenkelenden 121, 122 erhält, sodass der U-förmige Querschnitt zwischen den beiden U-Schenkelenden 121, 122 senkrecht zur Erstreckungsebene E geöffnet ist.

Das dazu verwendete und beispielsweise feststehende Unterteil 30 des Gesenks weist dazu zwei entsprechend abgerundete Kavitäten 300 auf, in die das beispielsweise bewegliche Oberteil 31 mit zwei vorstehenden Zapfen 310 unter Zwischenlage des Kreisrings 12 im ersten Umformschritt eintaucht und aus dem Kreisring 12 die über den abgerundeten Steg 120 verbundenen U-Schenkelenden 121, 122 ausformt.

Nachfolgend wird die solchermaßen mit U-förmigem Querschnitt ausgebildete Lochscheibe 10 einem zweiten Umformschritt unterzogen, der in Figur 3b dargestellt ist und ein Gesenk mit Unterteil 32 und Oberteil 33 verwendet, die mit spiegelbildlich zur Trennebene angeordneten abgerundeten Ausnehmungen 320, 330 ausgebildet sind. Auch hier kann beispielsweise das Unterteil 32 feststehend und das Oberteil 33 beweglich ausgebildet sein.

In diesem aus der Figur 3b ersichtlichen zweiten Umformschritt wird der etwa U-förmige Querschnitt des Kreisrings 12 abgerundet, indem die U-Schenkelenden 121, 122 einander zugewandt abgebogen werden. Bevorzugt wird dabei eine Querschnittskonfiguration gemäß Figur 3b erreicht, in der der Kreisring 12 einen im Wesentlichen kreisförmigen Querschnitt erhält und die U-Schenkelenden 121, 122 einen kreisbogenförmigen Verlauf erhalten und aneinander zur Anlage kommen.

Im Ergebnis wird damit der aus der Figur 3 a ersichtliche Stützring 1 erhalten, dessen konzentrische Bohrung 11 von einem Kreisring 12 mit abgerundet kreisförmigen Querschnitt umschlossen ist.

Ein solchermaßen erhaltener Stützring 1 kann insbesondere als Druckring eines Wellrohrs bzw. Wellschlauchs Verwendung finden und kann durch die vorangehend erläuterten einfachen Umformschritte besonders rationell aus einer Lochscheibe 10 des gewünschten metallischen Werkstoffes gefertigt werden.

Es versteht sich, dass der Stützring 1 neben der Verwendung als Druckring eines Wellrohrs bzw. Wellschlauchs auch für vielfältige andere Anwendungsfälle Verwendung finden kann.

Obwohl in den Zeichnungsfiguren 2 b und 3 b zwei unterschiedliche Gesenke als Umformwerkzeuge für den ersten und zweiten Umformschritt dargestellt sind, kann diese aufeinanderfolgende Umformung in den beiden Umformschritten auch in einem einzelnen Kombinationswerkzeug erfolgen.

### Bezugszeichenliste:

- 1: Stützring
- 10: Lochscheibe
- 11: Bohrung
- 12: Kreisring
- 30: Unterteil
- 31: Oberteil
- 32: Unterteil
- 33: Oberteil
- 120: Steg
- 121: U-Schenkelende
- 122: U-Schenkelende
- 300: Kavität
- 310: Zapfen
- 320: Ausnehmung
- 330: Ausnehmung

- E: Erstreckungsebene

## Patentansprüche

1. Verfahren zur Herstellung von Stützringen (1) aus einem metallischen Werkstoff, bei welchem in einem ersten Schritt Lochscheiben (10) mit einer konzentrischen Bohrung (11) und einem die konzentrische Bohrung (11) umgebenden Kreisring (12) bereitgestellt und anschließend in mehreren aufeinanderfolgenden Umformschritten zu dem Stützring umgeformt werden, **dadurch gekennzeichnet, dass** der Kreisring (12) in einem ersten Umformschritt einen etwa U-förmigen Querschnitt mit zwei über einen abgerundeten Steg (120) verbundenen U-Schenkelenden (121, 122) erhält und nachfolgend in einem zweiten Umformschritt die U-Schenkelenden (121, 122) einander zugewandt abgebogen werden.

2. Verfahren nach Anspruch 1, **dadurch gekennzeichnet, dass** im zweiten Umformschritt die U-Schenkelenden (121, 122) derart abgebogen werden, dass der Kreisring (12) einen im Wesentlichen kreisförmigen Querschnitt erhält.

3. Verfahren nach einem der Ansprüche 1 oder 2, **dadurch gekennzeichnet, dass** im zweiten Umformschritt die U-Schenkelenden (121, 122) aneinander zur Anlage kommen.

4. Verfahren nach einem der Ansprüche 1 bis 3, **dadurch gekennzeichnet, dass** die Lochscheiben (10) aus einem bereitgestellten Blech des metallischen Werkstoffs ausgestanzt werden.

5. Verfahren nach einem der Ansprüche 1 bis 4, **dadurch gekennzeichnet, dass** die Lochscheibe (10) sich in einer Erstreckungsebene (E) erstreckt und der Kreisring (12) im ersten Umformschritt senkrecht zur Erstreckungsebene (E) zu dem U-förmigen Querschnitt umgeformt wird.

6. Verwendung eines nach dem vorangehenden Verfahren hergestellten Stützringes (1) als Druckring eines Wellrohrs.
